# EUROPEAN PATENT SPECIFICATION

(11) **EP 3 402 045 B1**
(45) Date of publication and mention of the grant of the patent: **08.02.2023**
(21) Application number: 17382261.0
(22) Date of filing: 10.05.2017
(51) Int. Cl.: H02K 1/27, H02K 1/32

(54) **PERMANENT MAGNET MODULES**
PERMANENTMAGNETMODULE
MODULES À AIMANTS PERMANENTS

(43) Date of publication of application: 14.11.2018
(73) Proprietor: GE Renewable Technologies Wind B.V., 4817 PA Breda (NL)
(72) Inventor: Bueno de Santiago, Adrian, 08005 Barcelona (ES); Urresty, Julio César, 08029 Barcelona (ES); Keller, Stefan, 08005 Barcelona (ES)
(74) Representative: de Rooij, Mathieu Julien

(56) References cited:
- EP-A1- 2 075 898
- AT-B- 184 978
- DE-A1-102011 121 042
- US-A1- 2012 187 696
- US-B1- 6 208 054

## Description

The present disclosure relates to permanent magnet modules for a rotor, and more particularly to permanent magnet modules that are especially suitable for a generator rotor of a wind turbine.

### BACKGROUND

Electrical machines such as generators having a rotor carrying permanent magnets are known. They are generally deemed to be reliable and require less maintenance than other topologies.

Modern wind turbines are commonly used to supply electricity into the electrical grid. Wind turbines of this kind generally comprise a tower and a rotor arranged on the tower. The rotor, which typically comprises a hub and a plurality of blades, is set into rotation under the influence of the wind on the blades. This rotation is normally transmitted through a rotor shaft to a generator, either directly ("directly driven") or through the use of a gearbox. This way, the generator can produce electricity which can be supplied to the electrical grid.

Particularly for offshore wind turbines, direct drive systems employing permanent magnets are usually chosen. Such a direct drive wind turbine generator may have e.g. a diameter of 6 - 8 meters and a length of e.g. 2 - 3 meters. Hundreds of magnets may need to be attached, e.g. by screwing or gluing, to the circumference of the rotor. This manufacturing process can be cumbersome.

Furthermore, if one or more magnets are damaged and need to be replaced, the access to these magnets can be complicated (especially with large size generators), such that maintenance can become very expensive.

This size and type of generator is not limited to offshore applications and not even to the technical field of wind turbines only. Generators of considerable dimensions may also be found e.g. in steam turbines and water turbines.

Examples of permanent magnet rotors that aim at dealing with the problem of the attachment of large numbers of magnets may comprise a plurality of permanent magnet modules arranged on an outer or inner perimeter of a rim of the rotor.

A permanent magnet module may be defined as a unit having a plurality of permanent magnets, such that the plurality of magnets can be mounted and unmounted together. Such a module may have a module base with a shape suitable for housing or receiving a plurality of permanent magnets. The magnets may be fixed to the base in a diversity of manners. The base may be configured to be fixed to a rotor rim in such a way that the plurality of magnets are fixed together to the rotor rim through the module base. The use of permanent magnet modules may facilitate the formation of a generator rotor.

Irrespective of whether the permanent magnets are grouped in modules or not, the magnets are normally arranged so as to cause magnetic flux that follows a path that crosses an air-gap between the rotor and a stator in such a manner that the stator is reached and is influenced by the magnetic flux.

A large number of magnets is normally required, and also large amounts of fastening material/elements (e.g. wedges, screws, glue, welding, etc.) are needed to fix the magnets directly to the rotor rim or to corresponding module base. In configurations based on grouping the magnets in modules, further fastening elements may be required to fix the modules (i.e. module base with attached magnets) to the rotor rim.

Processing such large quantities of fastening material/elements may also complicate the assembly of the rotor and maintenance operations thereof. Another drawback may be that excessive extra material/elements may be present in the rotor in the sense that there are material/elements that are not needed for electromagnetic purposes, but only for fixation purposes. These extra materials/elements may negatively affect the electromagnetic behavior of the rotor.

Other electrical machines of relatively large dimensions, such as e.g. electrical motors comprising large quantities of permanent magnets are also known in the context of e.g. driving compressors or pumps, or in traction or marine applications. These large electrical motors may present similar problems to those described before in relation to generators.

Document US 2012/187696 A1 relates to a rotating electric machine and a wind power generation system, the rotating electric machine comprising a rotor and a stator. The rotor includes a rotor core having a plurality of permanent magnets circumferentially arranged thereon at intervals. In particular, the rotor core may be formed by alternately circumferentially arranging first magnetic pole portions having the permanent magnets and second magnetic pole portions having no permanent magnets.

Document AT184978B relates to a pole shoe for a rotor, wherein the pole shoe is fixed to upper portions of the side walls of a magnet receiving receptacle to close off the top side of the receptacle.

Examples of the present disclosure at least partially resolve at least some of the previous problems.

### SUMMARY

In a first aspect, a permanent magnet module for a rotor is provided in accordance with claim 1. The permanent magnet module is configured to be mounted to a rim of the rotor and comprises a metallic main body, a first permanent magnet component, a first non-magnetic component and a cover. The metallic main body forms a first partial pole piece at a first lateral side of the permanent magnet module, forms a second partial pole piece and forms a trench-shaped or channel-shaped first receptacle between the first and second partial pole pieces, the first receptacle having a substantially U-shaped cross-section including a bottom and two side walls.

The first permanent magnet component is arranged within the first receptacle of the metallic main body and is magnetized in such a way that, in use, the first permanent magnet component has a radial magnetization direction with respect to an axis of rotation of the rotor.

The first non-magnetic component is arranged between the first partial pole piece and the first permanent magnet component according to a direction that, in use, is (locally) substantially tangential to the rotor rim.

The cover is made of non-magnetic material and is fixed to upper portions of the side walls of the first receptacle to close off a top side of the first receptacle, thereby defining a top side of the permanent magnet module fixing the first permanent magnet component within the first receptacle.

The suggested configuration promotes magnetic fluxes between the first partial pole piece and the first permanent magnet component rather than between permanent magnets. This may permit reducing the number of permanent magnets to be used to form a complete rotor, which in turn may cause reduction of necessary material/elements to fix permanent magnets to the module base (i.e. the metallic main body).

The first non-magnetic component is arranged to cause a magnetic flux (between pole piece and permanent magnets) to follow a path that extends beyond a top side of the permanent magnet module, so as to reach and influence corresponding windings in the context of a complete generator (or motor).

The arrangement, material and dimensional characteristics of the non-magnetic component, with respect to the arrangement and characteristics of the permanent magnet component, may be such that magnetic flux lines passing through the non-magnetic component are minimized or avoided. For example, when the material employed for the non-magnetic component has a relatively low ability to support the formation of a magnetic field within itself, the required dimensions of the non-magnetic component may be smaller.

The fixation of the non-magnetic component may be implemented in conjunction with the fixation of the permanent magnet component, so that very little extra material/elements may be required to fix the non-magnetic component. In the case that a non-magnetic component is formed as a void space (containing air) no fixation (of the air) is required.

### BRIEF DESCRIPTION OF THE DRAWINGS

Non-limiting examples of the present disclosure will be described in the following, with reference to the appended drawings, in which:
Fig. 1 is a schematic representation of a cross-sectional view of a permanent magnet module and its attachment to a rotor rim, according to a first example;
Fig. 2 is a schematic representation of a cross-sectional view of a permanent magnet module and its attachment to a rotor rim, according to a second example;
Fig. 3 is a schematic representation of a cross-sectional view of a permanent magnet module and its attachment to a rotor rim, according to a third (non-claimed) example; and
Fig. 4 is a schematic representation of a cross-sectional view of a permanent magnet module and its attachment to a rotor rim, according to a fourth example.

### DETAILED DESCRIPTION OF EXAMPLES

In an aspect of the present disclosure, a permanent magnet module for a rotor is provided. The permanent magnet module is configured to be mounted to a rim of the rotor and comprises a metallic main body, a first permanent magnet component, a first non-magnetic component and a cover. The metallic main body forms a first partial pole piece at a first lateral side of the permanent magnet module, forms a second partial pole piece and forms a trench-shaped or channel-shaped first receptacle between the first and second partial pole pieces, the first receptacle having a substantially U-shaped cross-section that includes a bottom and two side walls.

Throughout the present disclosure, a non-magnetic component is to be regarded as a component made of materials that are not attracted or repelled when placed in an external magnetic field and cannot be magnetized themselves.

In some examples, the metallic main body forms the second partial pole piece at a second lateral side opposite to the first lateral side of the permanent magnet module, so that the first receptacle is formed between the first partial pole piece and the second partial pole piece. The permanent magnet module may comprise a second non-magnetic component arranged between the first permanent magnet component and the second partial pole piece according to a direction that, in use, is substantially tangential to the rotor rim.

In some implementations, the first (and the second non-magnetic) component may be formed as a void space (air is a non-magnetic medium) or as a space filled with non-magnetic material such as e.g. resin, plastic or similar material. The first permanent magnet component may e.g. act as a separator between cavities defining said (void or filled) spaces completely separated. Alternatively, the first receptacle (e.g. between the first and second partial pole pieces) may be filled with non-magnetic material and the first permanent magnet component may be embedded in the non-magnetic material. A layer of non-magnetic material may therefore exist below and/or above the first permanent magnet component.

In some examples, the metallic main body can be formed as a stack of metallic laminas, which may be advantageous in the sense that losses due to eddy currents may be reduced.

In accordance with the invention, the permanent magnet module comprises a cover at least partially fixing the first permanent magnet component in the first receptacle of the metallic main body and defining at least part of a top side of the permanent magnet module. An aspect of this cover may be that loosening of the first permanent magnet component (along with the non-magnetic components) may be effectively prevented.

In some non-claimed examples, the first receptacle of the metallic main body may be a through-hole so that the cover is an integral part of the metallic main body. An aspect of this "integral" cover is that protection of the first permanent magnet component (along with the non-magnetic components) may be stronger. A further aspect is that formation of the permanent magnet module may be simpler in comparison with e.g. the coupling of a "non-integral" cover to the metallic main body.

In some of these non-claimed examples, the metallic main body may comprise one or more holes longitudinally extending along the metallic main body between at least one of the first and second non-magnetic components and the top side of the permanent magnet module. An aspect of these holes is that extension of the magnetic flux beyond the top side of the permanent magnet module may be further promoted, since air is a non-magnetic medium. These holes may also have the function of cooling the module.

The receptacle of the metallic main body has a form of a trench or channel with a substantially U-shaped cross-section. The cover is made of non-magnetic material. Such a cover may provide a good protection of the permanent magnet and non-magnetic components without negatively affecting the path of the magnetic fluxes beyond the top side of the permanent magnet module.

In some configurations, at least one of the non-magnetic components (when made of non-magnetic material) may comprise one or more cooling holes substantially longitudinally extending along the non-magnetic material. An aspect of these cooling holes may be that cooling of the module is improved while preserving the function of suitably shaping the magnetic fluxes by the non-magnetic components, since the air (contained in the cooling holes) is a non-magnetic medium.

In some implementations, the first permanent magnet component and, optionally, the first and second non-magnetic components (when made of non-magnetic material) are at least partially fixed in the receptacle of the metallic main body with adhesive and/or with resin and/or in a press-fitted manner. An even stronger fixation may result from combining at least some of said fastening materials and/or techniques with or without the inclusion of any of the aforementioned covers.

As commented in other parts of the description, the first and second non-magnetic components may be formed as a void space (containing air), in which case no fixation (of the air) is required, or as a space filled with e.g. resin, in which case the resin is used as a filler.

In some examples, the permanent magnet module may have two lateral sides which, in use, extend generally along an axial direction of the rotor and each of said lateral sides may comprise a groove longitudinally extending along the lateral side and may be configured in such a way that, in use, an anchor substantially fits in the groove to fix the permanent magnet module to the rotor rim. The anchor may be a T-shaped anchor, for example.

An aspect of this fixation based on grooves and compatible anchors is that an efficient fastening of the module to the rotor rim may be implemented. This fixation may be efficient in terms of strength, flexibility, etc. and in the sense that only few fastening material/elements are needed. Such a fixation may therefore simplify the assembly of the whole rotor and subsequent maintenance operations such as e.g. replacing a permanent magnet module.

So far, permanent magnet modules having only one permanent magnet component that generates magnetic fluxes in cooperation with corresponding partial magnetic pole(s) have been described.

Alternatively to the modules with a single permanent magnet component, permanent magnet modules with more than one permanent magnet components along with corresponding partial pole piece(s) may be provided.

In these alternative implementations, the permanent magnet module comprises at least a second permanent magnet component and a second non-magnetic component. The metallic main body may form a second partial pole piece at a second lateral side opposite to the first lateral side of the permanent magnet module and may form a second receptacle. The second permanent magnet component may be arranged within the second receptacle of the metallic main body and may be magnetized in such a way that, in use, the second permanent magnet component has a radial magnetization direction with respect to an axis of rotation of the rotor. The second non-magnetic component may be arranged between the second partial pole piece and the second permanent magnet component according to a direction that, in use, is substantially tangential to the rotor rim.

Furthermore, the metallic main body may form a complete pole piece, the first receptacle may be formed between the first partial pole piece and the complete pole piece, and the second receptacle may be formed between the complete pole piece and the second partial pole piece. The permanent magnet module may comprise a third non-magnetic component arranged between the first permanent magnet component and the complete pole piece. The permanent magnet module may comprise a fourth non-magnetic component arranged between the complete pole piece and the second permanent magnet component.

These modules with two permanent magnet components may be seen as comprising two modules with one permanent magnet component as any one of those described before, wherein one of the partial pole pieces of a first of said modules and one of the partial pole pieces of a second of said modules integrally form the complete pole piece.

Hence, any of the optional features attributed to the modules with one permanent magnet component may be similarly applied to the modules with two permanent magnet components. For instance, an added cover may be used to at least partially fix (and protect) each of the permanent magnet components of the modules with two permanent magnet components.

In accordance with the same principles, permanent magnet modules with more than two permanent magnet components may also be provided.

In some examples, the complete pole piece may further comprise an axial hole adapted to receive a fixation rod, and a plurality of radial holes, such that the permanent magnet module can be fixed to a rotor rim by a plurality of bolts inserted in the radial holes and fixed to the fixation rod.

A rotor for a generator may be provided comprising a plurality of any one of the permanent magnet modules described before. A generator comprising said rotor and a wind turbine comprising said generator may also be provided. In particular, the wind turbine may be a direct drive wind turbine.

The formation of said rotor and corresponding generator as well as subsequent maintenance operations may be simpler, cheaper, less time consuming, etc. according to the previous arguments with regard to the suggested permanent magnet modules.

In yet a further example, an electrical machine comprising a rotor and a stator is provided. The rotor has a rotor rim, and a plurality of permanent magnet modules mounted on the rotor rim according to the invention.

In particular, the permanent magnet components of the permanent magnet modules may have the same radial magnetization direction. I.e. all permanent magnet components have their North and South at the same location, either closer to or further away from the stator arrangement.

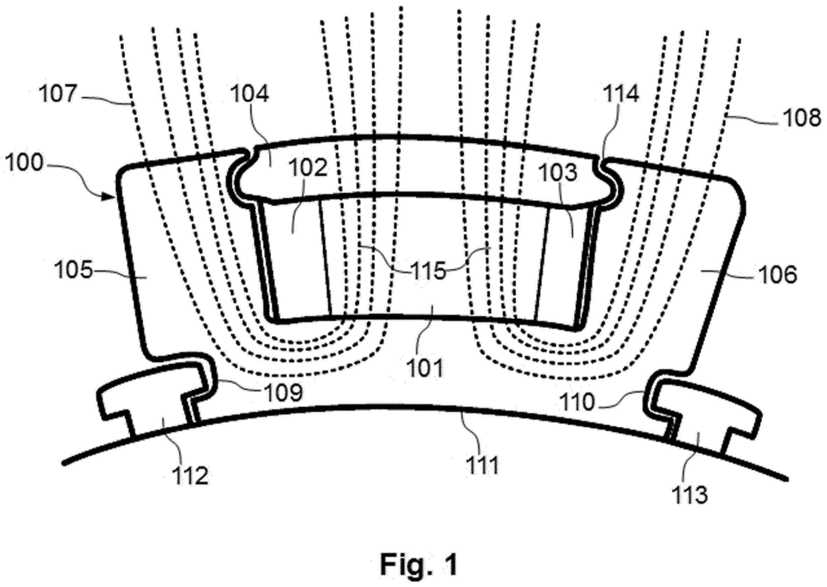

Fig. 1 is a schematic representation of a cross-sectional view of a permanent magnet module and its attachment to a rotor rim, according to a first example. The permanent magnet module is shown comprising a metallic main body 100, a permanent magnet component 101, a first non-magnetic component 102 and a second non-magnetic component 103.

The metallic main body 100 may be formed e.g. as a stack of metallic laminas arranged behind each other in the axial direction and attached to each other, such that losses due to eddy currents may be reduced. The metallic main body 100 may be made of e.g. steel or similar material.

The axial direction herein is to be understood as the direction of the axis of rotation of the rotor (i.e. the direction perpendicular to which the cross-section of the figures has been made).

The laminas of the stack of metallic laminas 100 may have been attached to each other through a bonding resin, such as e.g. epoxy, polyester, vinyl ester, etc. Alternatively, the laminas may have been attached to each other with an adhesive, such as e.g. a passive adhesive able to be activated by heat.

An adhesive able to be activated by heat may be defined as a passive substance which is not adherent while it is at a temperature below a temperature threshold, but becomes adherent when said temperature threshold is exceeded.

The attachment of the laminas with either resin or passive adhesive may have been performed by using a suitable mould having a heating system for heating the inside of the mould, for example.

The permanent magnet component 101 may comprise one or more permanent magnets arranged in the form of e.g. one or more axial rows of permanent magnets. The first and second non-magnetic components 102, 103 may comprise e.g. one or more blocks or accumulations of non-magnetic material such as resin, plastic or similar material.

The permanent magnet(s) 101 may be magnetized in such a way that (when the permanent magnet module is mounted to a rotor rim 111) the permanent magnet(s) 101 has a radial magnetization direction 115 with respect to an axis of rotation of the rotor.

The permanent magnet(s) 101 may be fixed within a receptacle of the stack of metallic laminas 100 in such a way that a first magnetic flux 107 and a second magnetic flux 108 are generated between the stack of metallic laminas 100 (partial pole pieces 105, 106) and the permanent magnet(s) 101.

The first block(s) or accumulation(s) of non-magnetic material 102 in this example is fixed between the permanent magnet(s) 101 and partial pole piece 105 of the stack of metallic laminas 100 in such a way that the first magnetic flux 107 follows a path that surrounds the first block(s) or accumulation(s) of non-magnetic material 102 and extends beyond a top side 114 of the permanent magnet module.

The expression "partial pole piece" is used herein to refer to a metallic part (of the metallic main body) that is configured to cooperate with another partial pole piece (e.g. of another module) to form a complete pole piece, i.e. a structure that serves to direct the magnetic field. Two neighbouring partial pole pieces may form a complete pole piece, for example.

The second block(s) or accumulation(s) of non-magnetic material 103 in this example is fixed between the permanent magnet(s) 101 and partial pole piece 106 of the stack of metallic laminas 100 in such a way that the second magnetic flux 108 follows a path that surrounds the second block(s) or accumulation(s) of non-magnetic material 103 and extends beyond the top side 114 of the permanent magnet module.

The permanent magnet module is configured to be mounted on a rotor rim 111.

The permanent magnet module in this example comprises a cover 104 to fix the permanent magnet(s) 101 and the first and second block(s) of non-magnetic material 102, 103 within the receptacle of the stack of metallic laminas 100. Said cover 104 may be configured to define at least part of the top side 114 of the permanent magnet module.

In cooperation with the cover 104, other techniques and/or materials may be used to fix the permanent magnet(s) 101, and optionally the non-magnetic material 102, 103, within the receptacle of the stack of metallic laminas 100. For example, magnets can be press-fitted and/or glued. Resin might also be used to fix the permanent magnet(s) 101.

The receptacle of the stack of metallic laminas 100 has a form of a trench or channel with a substantially U-shaped cross-section, so that the magnets 101 can be inserted from the top. The U-shape comprises a bottom and two sidewalls. The cover 104 closes off the top side of the receptacle and is fixed to corresponding upper portions of the sidewalls. The cover 104 is made of non-magnetic material, such as e.g. fiberglass, resin, stainless steel, etc. to further promote the extension of the magnetic fluxes 107, 108 beyond the top side 114 of the permanent magnet module. Such a cover 104 may serve to protect the magnets 101 against corrosion, for example.

In the particular case of Fig. 1, the cover 104 is shown completely covering the permanent magnet(s) 101 and the first and second block(s) or accumulation(s) of non-magnetic material 102, 103.

In alternative examples, the cover 104 may comprise first and second cover parts. In such examples, the first cover part may completely cover the first block(s) or accumulation(s) of non-magnetic material 102 and partially cover the permanent magnet(s) 101. The second cover part may completely cover the second block(s) or accumulation(s) of non-magnetic material 103 and partially cover the permanent magnet(s) 101.

The stack of metallic laminas 100 has two lateral sides which, when the permanent magnet module is mounted to a rotor rim 111, extend generally along an axial direction of the rotor. Each of said lateral sides (of the stack of metallic laminas 100) in this case comprises a groove 109, 110 longitudinally extending along the stack of metallic laminas 100. An anchor with a shape that is complementary to the grooves can be used to fix the modules to the rotor rim.

Each of the grooves 109, 110 may be configured to be a substantially rectangular cut-out such that a T-shaped anchor 112, 113 substantially fits in the groove 109, 110, respectively, to fix the permanent magnet module to the rotor rim 111. This is shown in the example of Fig. 1. T-shaped anchors and square grooves may rather easily be manufactured / machined.

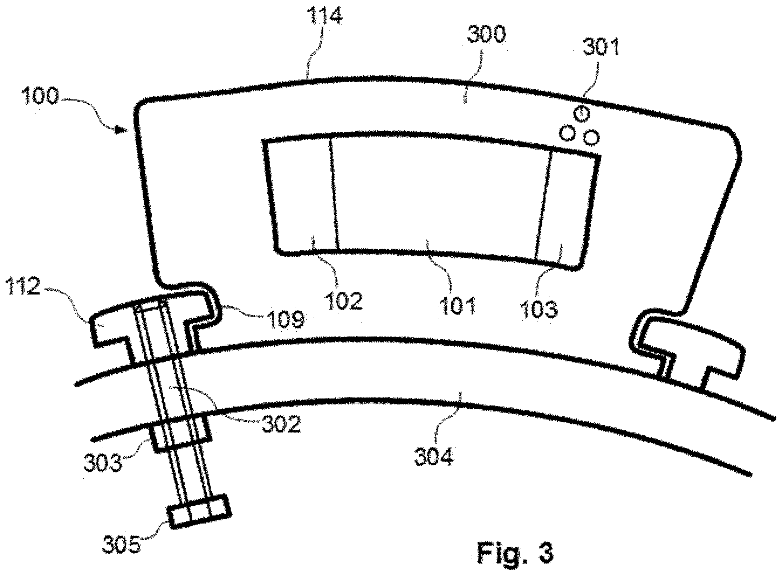

The fixation of the T-shaped anchors 112, 113 to the rotor rim 111 is not illustrated in detail in Fig. 1. Said fixation may be implemented e.g. in the same or similar manner as shown in Fig. 3 (in relation to anchor 112).

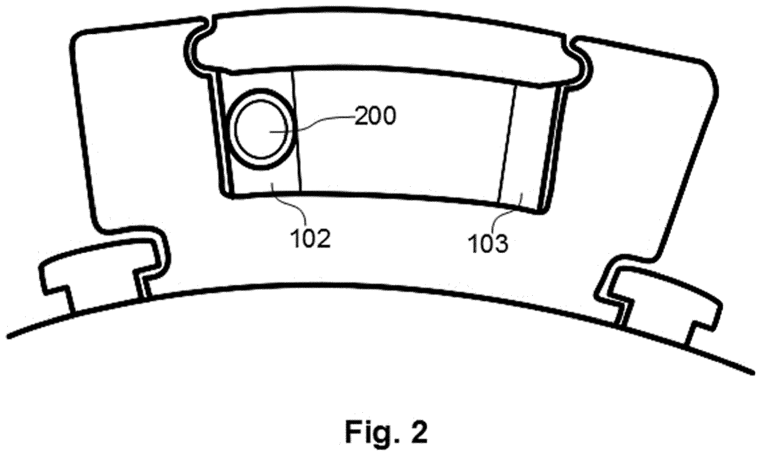

Fig. 2 is a schematic representation of a cross-sectional view of a permanent magnet module according to a second example. This permanent magnet module is similar to the module of Fig. 1. One difference is that one of the non-magnetic components 102 comprises an inner cooling hole 200 that may substantially longitudinally extend along the non-magnetic component 102. Alternatively or additionally, the other of the non-magnetic components 103 may comprise another inner cooling hole with the same or similar configuration.

Since air is a non-magnetic medium, the proposed inner cooling hole(s) may offer the double function of cooling inside parts of the module and of "guiding" corresponding magnetic flux so as to cause its extension beyond the top side of the module, as explained in other parts of the description.

Fig. 3 is a schematic representation of a cross-sectional view of a permanent magnet module and its attachment to a rotor rim, according to a third(non-claimed) example. In this particular case, the receptacle of the stack of metallic laminas 100 is a through-hole in which the permanent magnet(s) 101 and the non-magnetic material 102, 103 are fixed. Therefore, an integral part of the stack of metallic laminas 100 forms a cover 300 at least partially implementing the fixation of the permanent magnet(s) 101 along with the non-magnetic material 102, 103.

The stack of metallic laminas 100 may further comprise one or more through-holes 301 longitudinally extending along the stack of metallic laminas 100 between one of the blocks of non-magnetic material 103 and a top side 114 of the module. Alternatively or additionally, further one or more through-holes similar to the depicted through-holes 301 may longitudinally extend along the stack of metallic laminas 100 between the other of the blocks of non-magnetic material 102 and the top side 114 of the module. These through-holes 301 may cooperate with the corresponding non-magnetic material 103 to ensure that the magnetic flux 108 (see Fig. 1) effectively extends beyond the top side 114 of the module. An effect of providing the through-holes 301 is that a magnetic "bridge" from a central portion of the cover 300 to the partial pole pieces can be avoided, because the material of the cover quickly becomes magnetically saturated.

To assemble a generator rotor according to any of the examples of Fig. 1 - Fig. 3, anchors 112 may be loosely attached at the circumference of the rotor rim 304 using e.g. bolts 302 with nut 303. Then, the permanent magnet modules 100 may be inserted and slid between two neighbouring anchors. Then, to fix the magnet modules 100 in place, the bolts 302 may be tightened (moving nuts from position 305 to 303), so that the anchors 112 fix a portion of the module 100 to the outer circumference of the rotor rim 304.

A T-guide 112 configured and installed in the above or similar manner at each lateral side of the stack of metallic laminas 100 may keep the module strongly pressed against the rotor rim 304. A resistant fixation of the module may therefore be implemented which can efficiently withstand all relevant loads during operation of the rotor in the generator.

The configurations of Fig. 1 - Fig. 3 generate magnetic fluxes between metallic parts (partial pole pieces) and magnetic parts (permanent magnet component) instead of only between magnetic parts. Accordingly, as explained in other parts of the description, smaller amounts of magnets and fastening material/elements may be required in comparison with prior art configurations.

In the examples of Fig. 1 - Fig. 3, the permanent magnet component 101 is shown acting as a separator completely separating the first non-magnetic component 102 and the second non-magnetic component 103.

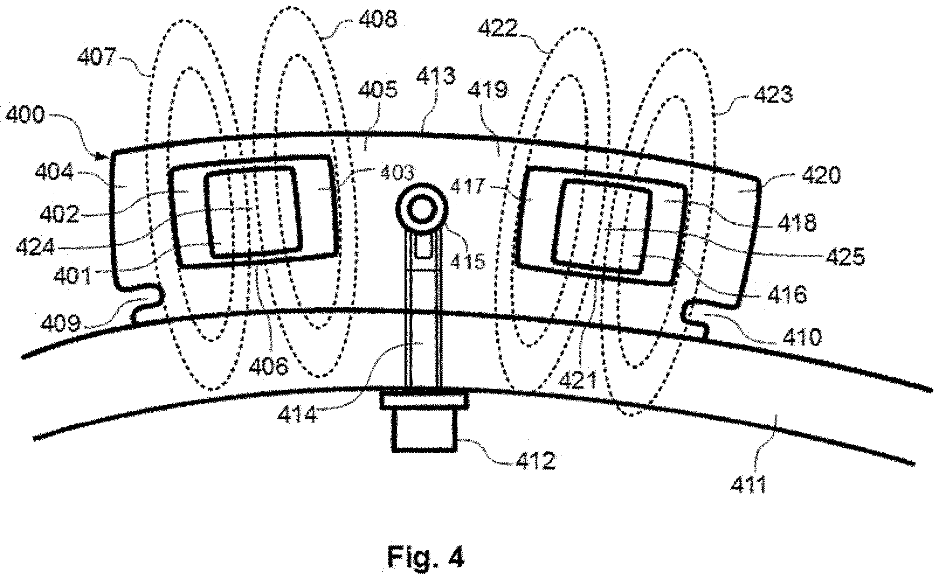

Fig. 4 is a schematic representation of a cross-sectional view of a permanent magnet module and its attachment to a rotor rim, according to a fourth example. In this case, a single module with two configurations as the ones shown in previous figures is proposed.

According to Fig. 4, a permanent magnet module may comprise a stack of metallic laminas 400 with two receptacles 406, 421.

Permanent magnet(s) 401 may be magnetized in such a way that (when the permanent magnet module is mounted to rotor rim 411) the permanent magnet(s) 401 has a radial magnetization direction 424 with respect to an axis of rotation of the rotor.

Permanent magnet(s) 401, non-magnetic material 402 and non-magnetic material 403 may be fixed within receptacle 406, such that magnetic flux 407 and magnetic flux 408 are generated extending beyond top side 413 of the stack of metallic laminas 400. Magnetic flux 407 is generated between partial pole piece 404 of the stack of metallic laminas 400 and permanent magnet(s) 401 and surrounding non-magnetic material 402. Magnetic flux 408 is generated between partial pole piece 405 of the stack of metallic laminas 400 and permanent magnet(s) 401 and surrounding non-magnetic material 403.

Permanent magnet(s) 416 may be magnetized in such a way that (when the permanent magnet module is mounted to rotor rim 411) the permanent magnet(s) 416 has a radial magnetization direction 425 with respect to an axis of rotation of the rotor.

In the example shown in Fig. 4, all the permanent magnet components 401 have the same radial magnetization, i.e. the North and South of the permanent magnets are arranged in the same manner for the permanent magnet components 401.

Permanent magnet(s) 416, non-magnetic material 417 and non-magnetic material 418 may be fixed within receptacle 421, such that magnetic flux 422 and magnetic flux 423 are generated extending beyond top side 413 of the stack of metallic laminas 400. Magnetic flux 422 is generated between partial pole piece 419 of the stack of metallic laminas 400 and permanent magnet(s) 416 and surrounding non-magnetic material 417. Magnetic flux 423 is generated between partial pole piece 420 of the stack of metallic laminas 400 and permanent magnet(s) 416 and surrounding non-magnetic material 418.

Partial pole piece 405 and partial pole piece 419 are shown integrally forming a central complete pole piece of the stack of metallic laminas 400.

The receptacle between partial pole pieces 404 and 405 is shown filled with non-magnetic material and with the permanent magnets 401 embedded therein, so that a layer of non-magnetic material exists above and below the permanent magnets 401. A similar configuration is shown with respect to the other receptacle between partial pole pieces 419 and 420.

The metallic main body (stack of metallic laminas) 400 may comprise, in the central complete pole piece, an axial hole in which a rod 415 may be inserted. A plurality of radial holes, at different axial positions, may be drilled in the metallic main body 400. Rod 415 may comprise a number of transverse through-holes, such that when the rod is inserted, the transverse through-holes are lined up with the radial holes of the metallic main body 400. Bolts 414 with nuts 412 may be inserted in these radial holes and may extend into and beyond the transverse holes of the rod 415, into an upper portion of the metallic main body 400.

The stack of metallic laminas 400 may further comprise grooves 409, 410 longitudinally extending along the stack of metallic laminas 400 at opposite lateral sides. Each of the grooves 409, 410 may be configured in such a way that, in use, an anchor (not shown) substantially fits in the groove 409, 410, respectively, to further fix the permanent magnet module to the rotor rim 411.

It should be noted that in the previous examples, on both sides of the modules, only "partial" pole pieces are formed. These partial pole pieces form a "complete" pole piece once a neighbouring permanent magnet module with a corresponding partial pole piece is installed.

In some implementations, the permanent magnet component is at least fixed in the housing component with a top wall, and optionally with adhesive and/or with resin and/or in a press-fitted manner. An aspect of the top wall is that a stronger protection of the permanent magnet component may be provided against e.g. corrosion of magnets, loosening of magnets, etc. Resin may also be used to fill void spaces between the permanent magnet component and any of the walls of the housing component.

The housing component may be formed as a stack of metallic laminas, which may be advantageous in the sense that losses due to eddy currents may be reduced. The permanent magnet component may be housed in a fixed manner in a through-hole of the housing component, so that the aforementioned top wall is an integral part of the housing component. This may provide an even better protection of the magnets.

In all the examples disclosed herein, magnetic fluxes between a metallic pole piece and a magnetic component are promoted rather than only between magnetic components. Hence, a generator rotor may be formed with smaller quantities of permanent magnets and smaller quantities of permanent magnet modules, in comparison with prior art configurations.

The fixation of the permanent magnets to modules and the fixation of modules to the rotor rim are also simplified with the use of smaller amounts of fastening material/elements (which do not have an electromagnetic role). Formation of a generator rotor and subsequent maintenance operations thereof may thus be easier, cheaper, less time consuming, etc. in comparison with prior art approaches.

This written description has used examples to disclose the invention, including the preferred embodiments, and also to enable any person skilled in the art to practice the invention, including making and using any devices or systems and performing any incorporated methods. The patentable scope of the invention is defined by the claims, and may include other examples that occur to those skilled in the art.

## Claims

1. A permanent magnet module for a rotor, configured to be mounted to a rim (111) of the rotor and comprising a metallic main body (100; 400), a first permanent magnet component (101; 401), a first non-magnetic component (102; 402), and a cover (104); wherein
the metallic main body (100; 400) forms a first partial pole piece (105; 404) at a first lateral side of the permanent magnet module, forms a second partial pole piece (106) at a second lateral side opposite to the first lateral side of the permanent magnet module and forms a trench-shaped or channel-shaped first receptacle (406) between the first (105; 404) and second (106) partial pole pieces, the first receptacle (406) having a substantially U-shaped cross-section including a bottom and two side walls; wherein
the first permanent magnet component (101; 401) is arranged within the first receptacle of the metallic main body (100; 400) and is magnetized in such a way that, in use, the first permanent magnet component (101; 401) has a radial magnetization direction (115; 424) with respect to an axis of rotation of the rotor; wherein
the first non-magnetic component (102; 402) is arranged in a direction substantially tangential to the rotor rim (111) between the first partial pole piece (105; 404) and the first permanent magnet component (101; 401); wherein
the cover (104) is made of non-magnetic material and is fixed to upper portions of the side walls of the first receptacle to close off a top side of the first receptacle, thereby defining a top side (114) of the permanent magnet module fixing the first permanent magnet component (101) within the first receptacle.

2. A permanent magnet module according to claim 1, wherein the permanent magnet module comprises a second non-magnetic component (103) arranged in a direction substantially tangential to the rotor rim between the first permanent magnet component (101) and the second partial pole piece (106).

3. A permanent magnet module according to claim 1, comprising a second permanent magnet component (416) and a second non-magnetic component (418); wherein
the metallic main body (400) forms a second partial pole piece (420) at a second lateral side opposite to the first lateral side of the permanent magnet module and forms a second receptacle (421); wherein
the metallic main body (400) forms a complete pole piece (405, 419) formed by two neighbouring partial pole pieces (405, 419); wherein
the first receptacle (406) is formed between the first partial pole piece (404) and the complete pole piece (405, 419), and the second receptacle (421) is formed between the complete pole piece (405, 419) and the second partial pole piece (420); wherein
the second permanent magnet component (416) is arranged within the second receptacle (421) of the metallic main body (400) and is magnetized in such a way that, in use, the second permanent magnet component (416) has a radial magnetization direction (425) with respect to an axis of rotation of the rotor; wherein
the second non-magnetic component (418) is in a direction substantially tangential to the rotor rim (411) arranged between the second partial pole piece (420) and the second permanent magnet component (416); wherein
the permanent magnet module comprises a third non-magnetic component (403) arranged between the first permanent magnet component (401) and the complete pole piece (405, 419); and wherein
the permanent magnet module comprises a fourth non-magnetic component (417) arranged between the complete pole piece (405, 419) and the second permanent magnet component (416).

4. A permanent magnet module according to claim 3, wherein the complete pole piece further comprises an axial hole adapted to receive a fixation rod (415), and a plurality of radial holes, such that the permanent magnet module can be fixed to a rotor rim by a plurality of bolts (414) inserted in the radial holes and fixed to the fixation rod.

5. A permanent magnet module according to any of claims 1 to 4, wherein the first non-magnetic component (102) comprises one or more cooling holes (200) substantially longitudinally extending along the non-magnetic component (102).

6. A permanent magnet module according to any of claims 1 to 5, wherein the permanent magnet module has two lateral sides which, in use, extend generally along an axial direction of the rotor; and wherein each of the lateral sides of the permanent magnet module comprises a groove (109, 110; 409, 410) longitudinally extending along the lateral side and being configured in such a way that, in use, an anchor (112, 113) substantially fits in the groove (109, 110; 409, 410) to fix the permanent magnet module to the rotor rim (111; 411).

7. A rotor comprising a plurality of permanent magnet modules according to any of claims 1 to 6.

8. A generator comprising a rotor according to claim 7.

9. A wind turbine comprising a generator according to claim 8.

## Patentansprüche

1. Dauermagnetmodul für einen Rotor, das so konfiguriert ist, dass es an einem Rand (111) des Rotors montiert werden kann, und das einen metallischen Hauptkörper (100; 400), eine erste Dauermagnetkomponente (101; 401), eine erste nichtmagnetische Komponente (102; 402) und eine Abdeckung (104) umfasst; wobei
der metallische Hauptkörper (100; 400) ein erstes Teilpolstück (105; 404) an einer ersten lateralen Seite des Dauermagnetmoduls bildet, ein zweites Teilpolstück (106) an einer zweiten lateralen Seite gegenüber der ersten lateralen Seite des Dauermagnetmoduls bildet und eine grabenförmige oder kanalförmige erste Aufnahme (406) zwischen dem ersten (105; 404) und dem zweiten (106) Teilpolstück bildet, wobei die erste Aufnahme (406) einen im Wesentlichen U-förmigen Querschnitt mit einem Boden und zwei Seitenwänden aufweist; wobei
die erste Dauermagnetkomponente (101; 401) innerhalb der ersten Aufnahme des metallischen Hauptkörpers (100; 400) angeordnet ist und derart magnetisiert ist, dass die erste Dauermagnetkomponente (101; 401) im Gebrauch eine radiale Magnetisierungsrichtung (115; 424) in Bezug auf eine Drehachse des Rotors aufweist; wobei
die erste nichtmagnetische Komponente (102; 402) in einer Richtung im Wesentlichen tangential zum Rotorkranz (111) zwischen dem ersten Teilpolstück (105; 404) und der ersten Dauermagnetkomponente (101; 401) angeordnet ist; wobei
die Abdeckung (104) aus nichtmagnetischem Material besteht und an oberen Abschnitten der Seitenwände des ersten Behälters befestigt ist, um eine Oberseite des ersten Behälters zu verschließen, wodurch eine Oberseite (114) des Dauermagnetmoduls definiert wird, die die erste Dauermagnetkomponente (101) innerhalb des ersten Behälters fixiert.

2. Dauermagnetmodul nach Anspruch 1, wobei das Dauermagnetmodul eine zweite nichtmagnetische Komponente (103) umfasst, die in einer im Wesentlichen tangentialen Richtung zum Rotorrand zwischen der ersten Dauermagnetkomponente (101) und dem zweiten Teilpolstück (106) angeordnet ist.

3. Dauermagnetmodul nach Anspruch 1, umfassend eine zweite Dauermagnetkomponente (416) und eine zweite nichtmagnetische Komponente (418), wobei
der metallische Hauptkörper (400) ein zweites Teilpolstück (420) an einer zweiten seitlichen Seite gegenüber der ersten seitlichen Seite des Dauermagnetmoduls bildet und eine zweite Aufnahme (421) bildet; wobei
der metallische Hauptkörper (400) ein vollständiges Polstück (405, 419) bildet, das aus zwei benachbarten Teilpolstücken (405, 419) gebildet wird; wobei
die erste Aufnahme (406) zwischen dem ersten Teilpolstück (404) und dem vollständigen Polstück (405, 419) ausgebildet ist, und die zweite Aufnahme (421) zwischen dem vollständigen Polstück (405, 419) und dem zweiten Teilpolstück (420) ausgebildet ist; wobei
die zweite Dauermagnetkomponente (416) innerhalb der zweiten Aufnahme (421) des metallischen Hauptkörpers (400) angeordnet ist und derart magnetisiert ist, dass die zweite Dauermagnetkomponente (416) im Gebrauch eine radiale Magnetisierungsrichtung (425) in Bezug auf eine Drehachse des Rotors aufweist; wobei
die zweite nichtmagnetische Komponente (418) in einer Richtung im Wesentlichen tangential zum Rotorkranz (411) zwischen dem zweiten Teilpolstück (420) und der zweiten Dauermagnetkomponente (416) angeordnet ist; wobei
das Dauermagnetmodul eine dritte nichtmagnetische Komponente (403) umfasst, die zwischen der ersten Dauermagnetkomponente (401) und dem vollständigen Polstück (405, 419) angeordnet ist; und wobei
das Dauermagnetmodul eine vierte nichtmagnetische Komponente (417) umfasst, die zwischen dem vollständigen Polstück (405, 419) und der zweiten Dauermagnetkomponente (416) angeordnet ist.

4. Dauermagnetmodul nach Anspruch 3, wobei das vollständige Polstück ferner ein axiales Loch zur Aufnahme einer Befestigungsstange (415) und mehrere radiale Löcher aufweist, so dass das Dauermagnetmodul durch mehrere in die radialen Löcher eingesetzte und an der Befestigungsstange befestigte Bolzen (414) an einem Rotorkranz befestigt werden kann.

5. Dauermagnetmodul nach einem der Ansprüche 1 bis 4, wobei die erste nichtmagnetische Komponente (102) ein oder mehrere Kühllöcher (200) aufweist, die sich im Wesentlichen in Längsrichtung der nichtmagnetischen Komponente (102) erstrecken.

6. Dauermagnetmodul nach einem der Ansprüche 1 bis 5, wobei das Dauermagnetmodul zwei laterale Seiten aufweist, die sich im Gebrauch im Allgemeinen entlang einer axialen Richtung des Rotors erstrecken; und wobei jede der lateralen Seiten des Dauermagnetmoduls eine Nut (109, 110; 409, 410) umfasst, die sich in Längsrichtung entlang der lateralen Seite erstreckt und so konfiguriert ist, dass im Gebrauch ein Anker (112, 113) im Wesentlichen in die Nut (109, 110; 409, 410) passt, um das Dauermagnetmodul am Rotorrand (111; 411) zu befestigen.

7. Rotor mit einer Vielzahl von Dauermagnetmodulen nach einem der Ansprüche 1 bis 6.

8. Ein Generator mit einem Rotor nach Anspruch 7.

9. Windkraftanlage mit einem Generator nach Anspruch 8.

## Revendications

1. Module d'aimant permanent pour un rotor, configuré pour être monté sur une couronne (111) du rotor et comprenant un corps principal métallique (100 ; 400), un premier composant d'aimant permanent (101 ; 401), un premier composant non magnétique (102 ; 402), et un couvercle (104) ; dans lequel
le corps principal métallique (100 ; 400) forme une première pièce polaire partielle (105 ; 404) au niveau d'un premier côté latéral du module d'aimant permanent, forme une seconde pièce polaire partielle (106) au niveau d'un second côté latéral opposé au premier côté latéral du module d'aimant permanent et forme un premier réceptacle (406) en forme de tranchée ou de canal entre les première (105 ; 404) et seconde (106) pièces polaires partielles, le premier réceptacle (406) ayant une section transversale sensiblement en forme de U comprenant un fond et deux parois latérales ; dans lequel
le premier composant d'aimant permanent (101 ; 401) est disposé à l'intérieur du premier réceptacle du corps principal métallique (100 ; 400) et est magnétisé de telle manière que, en utilisation, le premier composant d'aimant permanent (101 ; 401) a une direction de magnétisation radiale (115 ; 424) par rapport à un axe de rotation du rotor ; où
le premier composant non magnétique (102 ; 402) est disposé dans une direction sensiblement tangentielle à la couronne du rotor (111) entre la première pièce polaire partielle (105 ; 404) et le premier composant d'aimant permanent (101 ; 401) ; dans lequel
le couvercle (104) est fait d'un matériau non magnétique et est fixé aux parties supérieures des parois latérales du premier réceptacle pour fermer un côté supérieur du premier réceptacle, définissant ainsi un côté supérieur (114) du module d'aimant permanent fixant le premier composant d'aimant permanent (101) à l'intérieur du premier réceptacle.

2. Module d'aimant permanent selon la revendication 1, dans lequel le module d'aimant permanent comprend un second composant non magnétique (103) disposé dans une direction sensiblement tangentielle au bord du rotor entre le premier composant d'aimant permanent (101) et la seconde pièce polaire partielle (106).

3. Module d'aimant permanent selon la revendication 1, comprenant un deuxième composant d'aimant permanent (416) et un deuxième composant non magnétique (418) ; dans lequel
le corps principal métallique (400) forme une deuxième pièce polaire partielle (420) au niveau d'un deuxième côté latéral opposé au premier côté latéral du module d'aimant permanent et forme un deuxième réceptacle (421) ; dans lequel
le corps principal métallique (400) forme une pièce polaire complète (405, 419) formée par deux pièces polaires partielles voisines (405, 419) ; dans lequel
le premier réceptacle (406) est formé entre la première pièce polaire partielle (404) et la pièce polaire complète (405, 419), et le second réceptacle (421) est formé entre la pièce polaire complète (405, 419) et la seconde pièce polaire partielle (420) ; dans lequel
le deuxième composant d'aimant permanent (416) est disposé à l'intérieur du deuxième réceptacle (421) du corps principal métallique (400) et est magnétisé de telle manière que, en utilisation, le deuxième composant d'aimant permanent (416) a une direction de magnétisation radiale (425) par rapport à un axe de rotation du rotor ; dans lequel
le second composant non magnétique (418) est dans une direction sensiblement tangentielle à la couronne du rotor (411) disposée entre la seconde pièce polaire partielle (420) et le second composant d'aimant permanent (416) ; dans lequel
le module d'aimant permanent comprend un troisième composant non magnétique (403) disposé entre le premier composant d'aimant permanent (401) et la pièce polaire complète (405, 419) ; et dans lequel
le module d'aimant permanent comprend un quatrième composant non magnétique (417) disposé entre la pièce polaire complète (405, 419) et le deuxième composant d'aimant permanent (416).

4. Module à aimant permanent selon la revendication 3, dans lequel la pièce polaire complète comprend en outre un trou axial adapté pour recevoir une tige de fixation (415), et une pluralité de trous radiaux, de sorte que le module à aimant permanent peut être fixé à une couronne de rotor par une pluralité de boulons (414) insérés dans les trous radiaux et fixés à la tige de fixation.

5. Module à aimant permanent selon l'une quelconque des revendications 1 à 4, dans lequel le premier composant non magnétique (102) comprend un ou plusieurs trous de refroidissement (200) s'étendant sensiblement longitudinalement le long du composant non magnétique (102).

6. Module d'aimant permanent selon l'une quelconque des revendications 1 à 5, dans lequel le module d'aimant permanent a deux côtés latéraux qui, en utilisation, s'étendent généralement le long d'une direction axiale du rotor ; et dans lequel chacun des côtés latéraux du module d'aimant permanent comprend une rainure (109, 110 ; 409, 410) s'étendant longitudinalement le long du côté latéral et étant configurée de telle manière que, en utilisation, une ancre (112, 113) s'adapte sensiblement dans la rainure (109, 110 ; 409, 410) pour fixer le module d'aimant permanent à la couronne du rotor (111 ; 411).

7. Rotor comprenant une pluralité de modules d'aimants permanents selon l'une quelconque des revendications 1 à 6.

8. Générateur comprenant un rotor selon la revendication 7.

9. Eolienne comprenant un générateur selon la revendication 8.
